# DEMANDE DE BREVET EUROPEEN

(11) **EP 1 669 269 A1**
(43) Date de publication de la demande: **14.06.2006**
(21) Numéro de dépôt: 05300901.5
(22) Date de dépôt: 08.11.2005
(51) Int. Cl.: B60T 11/18, F16C 11/06

(54) **Liaison autobloquante entre une tige de commande à rotule et une pièce plane**

(30) Priorité: 07.12.2004 FR 0413036
(71) Demandeur: Peugeot Citroen Automobiles SA, 78943 Vélizy-Villacoublay Cedex (FR)
(72) Inventeur: ANGEBAUD, Pascal, 95870, BEZONS (FR)

(57) **Abrégé**

L'invention a pour objet un dispositif de liaison (10) autobloquante entre une tige de commande (1) à rotule (3) et une pièce plane (2). Le dispositif de liaison comprend un verrou (11) formé par une pièce cylindrique munie d'une cavité hémisphérique (14) adaptée pour loger la rotule (3) ménagée à l'extrémité de la tige de commande (1) et un poussoir (20) fixé solidairement à la pièce plane (2) et relié au verrou (11). Le verrou (11) et le poussoir (20) comprennent des moyens (15, 16, 17, 21, 23) de fixation l'un sur l'autre par coulissement selon une direction perpendiculaire à l'axe longitudinal de la tige de commande (1).

## Description

La présente invention concerne un dispositif de liaison autobloquante entre une tige de commande à rotule et une pièce plane.

L'invention concerne également un véhicule automobile équipé d'au moins un tel dispositif de liaison autobloquante entre une tige de commande d'un amplificateur de freinage et une pédale de frein.

Les véhicules automobiles sont équipés, notamment d'un amplificateur de freinage comportant, de manière classique, une tige de commande munie à l'une de ses extrémités d'une rotule et reliée à une pédale de frein par un dispositif de liaison autobloquante qui doit répondre à diverses fonctions.

En effet, ce genre de dispositif de liaison autobloquante doit :
- transmettre un effort et un mouvement simultanément entre la pièce plane formée par la pédale de frein et la tige de commande reliée à l'amplificateur et dans les deux sens,
- s'adapter respectivement aux dimensions et à la forme de la pièce plane et de la tige de commande,
- s'adapter dans l'environnement de l'habitacle du véhicule,
- résister aux conditions de température et d'humidité de l'habitacle,
- limiter au mieux les jeux fonctionnels entre la pièce plane et la tige de commande,
- résister à l'effort exercer par la pièce plane et par l'amplificateur de freinage ainsi que résister aux manipulations lors du montage,
- assurer une sécurité de montage correct au niveau de la liaison,
- ne transmettre aucun son audible aux passagers lors de l'actionnement de la pièce plane,
- faciliter le montage et le démontage, et
- permettre à un opérateur d'accéder physiquement et visuellement à la liaison dans l'environnement du véhicule.

A cet effet, on connaît des dispositifs de liaison qui comprennent un poussoir muni d'une portion sphérique pour recevoir la rotule de la tige de commande et destiné à être fixé sur la pièce plane et un verrou coulissant sur la tige de commande et muni de pattes flexibles d'encliquetage sur le poussoir.

Avant d'effectuer l'assemblage des différents éléments constituant le dispositif de liaison, le poussoir est accroché ou fixé sur la pièce plane et le verrou est monté sur la tige de commande. Pour verrouiller la liaison, la rotule est positionnée dans le poussoir et le verrou est déplacé par coulissement sur la tige de commande jusqu'au maintien de la liaison par les pattes flexibles qui viennent s'encliqueter sur le poussoir.

Le principal inconvénient de ce dispositif de liaison réside surtout dans le montage qui nécessite deux doigts pour assurer le verrouillage des différents éléments entre eux ce qui n'est pas toujours évident pour l'opérateur compte tenu du peu de place dont il dispose.

Dans d'autres dispositifs de liaison connues, le verrou qui est formé par une pièce cylindrique comporte, à chacune de ses extrémités, une pluralité de pattes flexibles destinées à bloquer par encliquetage d'un côté le poussoir et de l'autre côté la rotule de la tige de commande. Dans ce cas, le poussoir se glisse dans le verrou et cet ensemble est monté sur la pièce plane si bien que le verrou est coincé entre le poussoir et cette pièce plane. Ensuite, la rotule de la tige de commande est introduite dans le verrou où elle est maintenue appliquée contre le poussoir par les pattes flexibles du verrou.

L'avantage de cette solution par rapport à la précédente est d'éviter d'avoir à utiliser les mains pour réaliser le verrouillage du dispositif car il suffit à l'opérateur de positionner la tige de commande dans l'alignement du verrou et de déplacer la pièce plane, c'est à dire la pédale de frein.

Mais, d'une manière générale, les dispositifs utilisés jusqu'à présent, supportent des efforts limités car le sens de verrouillage du verrou sur le poussoir d'une part et de la tige de commande sur le verrou d'autre part, est dirigé dans le même sens que celui des efforts si bien que le verrou formé par une pièce en matière plastique supporte la totalité des efforts du dispositif et qui, dans le cas d'une pédale de frein, peuvent atteindre environ une tonne.

L'invention a pour but de proposer un dispositif de liaison autobloquante entre une tige de commande à rotule et une pièce plane qui évite les inconvénients précédemment mentionnés et qui est compatible avec les efforts requis.

L'invention a pour objet un dispositif de liaison autobloquante entre une tige de commande à rotule et une pièce plane, comme par exemple entre une tige de commande d'un amplificateur de freinage et une pédale de frein d'un véhicule automobile, ledit dispositif de liaison comprenant :
- un verrou formé par une pièce cylindrique munie d'une cavité hémisphérique adaptée pour loger la rotule ménagée à une extrémité de la tige de commande et comportant, à l'une de ses extrémités, une pluralité de pattes flexibles dont la partie intérieure est recourbée vers l'intérieur de la pièce pour bloquer la rotule après son introduction dans ladite cavité, et
- un poussoir fixé solidairement à la pièce plane et relié audit verrou,
caractérisé en ce que le verrou et le poussoir comprennent des moyens de liaison l'un sur l'autre par coulissement selon une direction perpendiculaire à l'axe longitudinal de la tige de commande.

Selon d'autres caractéristiques de l'invention :
- les moyens de fixation comprennent une plaque rectangulaire disposée à l'extrémité de la pièce opposée à celle comportant les pattes flexibles et une plaque rectangulaire portée par le poussoir, lesdites plaques comportant, sur deux côtés opposés, des éléments d'emboîtement conjugués,
- les côtés des plaques comportant lesdits éléments d'emboîtement sont deux côtés horizontaux,
- les éléments d'emboîtement sont formés par des glissières et des rails,
- les glissières sont formées sur les deux côtés opposés de la plaque du verrou et les rails sont formés sur les côtés opposés de la plaque du poussoir,
- les rails sont formés sur les deux côtés opposés de la plaque du verrou et les glissières sont formées sur les deux côtés opposés de la plaque du poussoir,
- chaque glissière comporte, au niveau d'au moins une de ses extrémités, un pion souple de blocage sur le rail correspondant,
- le poussoir comporte deux pattes parallèles dont l'écartement est sensiblement égal à l'épaisseur de la pièce plane et s'étendant perpendiculairement à la plaque du poussoir, lesdites pattes étant solidaires des côtés de cette plaque entre les éléments d'emboîtement,
- la plaque du poussoir comporte, en son centre, une calotte sphérique, et
- le poussoir est formé par une pièce métallique.

L'invention a également pour objet un véhicule automobile,
caractérisé en ce qu'il est équipé d'au moins un dispositif de liaison tel que précédemment mentionné, pour la liaison entre une tige de commande d'un amplificateur de freinage et une pédale de frein.

Les caractéristiques et avantages de l'invention apparaîtront à la lecture de la description qui va suivre, donnée à titre d'exemple et faite en référence aux dessins annexés, sur lesquels :
- la Fig. 1 est une vue en perspective éclatée d'un dispositif de liaison autobloquante conforme à l'invention,

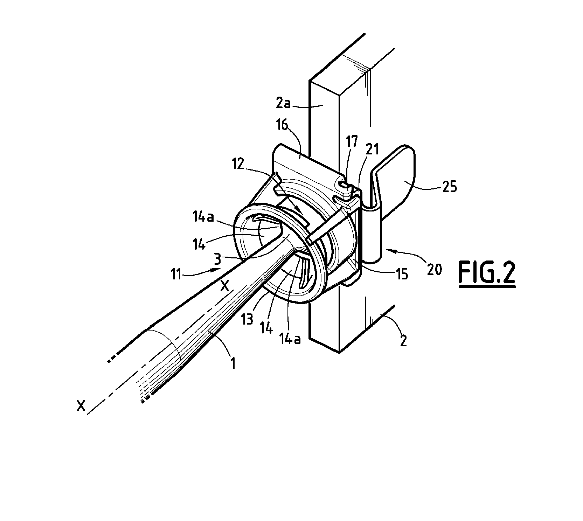

- la Fig. 2 est une vue en perspective du dispositif de liaison de la Fig. 1, en position assemblée, et
- la Fig. 3 est une vue schématique en coupe longitudinale du dispositif de liaison en position assemblée.

Sur les figures, on a représenté un dispositif de liaison autobloquante désigné dans son ensemble par la référence 10 et qui est destiné à assurer la liaison entre une tige de commande 1, par exemple d'un amplificateur de freinage d'un véhicule automobile, et une pièce plane 2, par exemple une pédale de frein. La tige de commande 1 se termine par une rotule 3.

Le dispositif de liaison 10 se compose d'un verrou désigné par la référence générale 11 et qui est formé par une pièce cylindrique munie d'une cavité 12 hémisphérique adaptée pour loger la rotule 3 de la tige de commande 1. Le verrou 11 est muni, à l'une de ses extrémités, d'une ouverture 13 permettant l'introduction de la rotule 3 de la tige de commande 1 et qui est prolongée par une pluralité de pattes flexibles 14 s'étendant vers l'intérieur du verrou 11 en direction de la cavité 12.

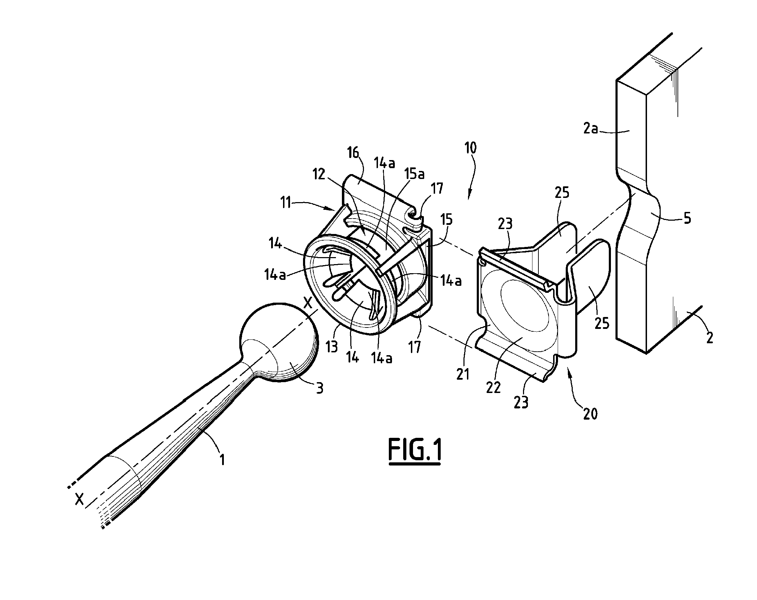

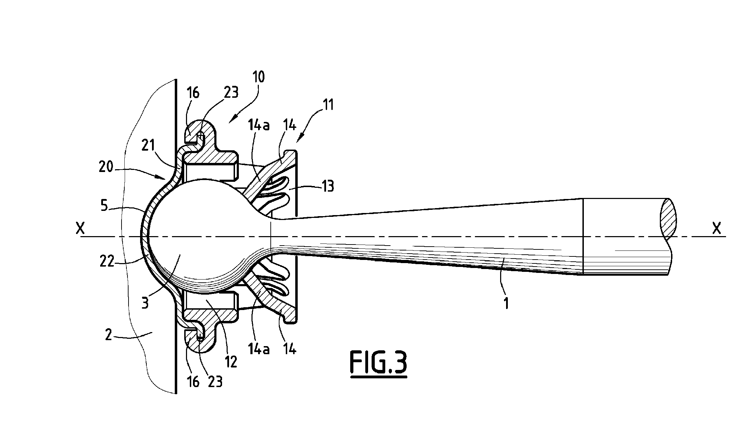

Ainsi que montré aux figures 1 et 3, la partie intérieure 14a de chaque patte flexible 14 est recourbée vers l'intérieur de la pièce formant le verrou 11 en déterminant un cercle de diamètre inférieur à celui de la rotule 3 et ces pattes flexibles 14 sont adaptées pour s'écarter lors de l'introduction de la rotule 3 à l'intérieur de la cavité 12 et pour se rabattre après l'introduction de cette rotule 3.

Le dispositif de liaison 10 comprend également un poussoir désigné par la référence générale 20 destiné à être fixé solidairement à la pièce plane 2 et à assurer la liaison entre le verrou 11 et ladite pièce plane 2.

Pour cela, le verrou 11 et le poussoir 20 comprennent des moyens de fixation l'un sur l'autre par coulissement selon une direction perpendiculaire à l'axe longitudinal XX de la tige de commande 1.

Les moyens de fixation du verrou 11 sur le poussoir 20 comprennent une plaque rectangulaire 15 percée d'un orifice central 15a situé dans le prolongement de la cavité 12 et disposée à l'extrémité de la pièce formant le verrou 11 opposée à celle comportant les pattes flexibles 14. Les moyens de fixation comprennent aussi une plaque rectangulaire 21 portée par le poussoir 20 et comportant, en son centre, une calotte sphérique 22 pour le positionnement de l'extrémité de la rotule 3, comme on le verra ultérieurement.

Les plaques, respectivement 15 et 21, comportent sur deux côtés opposés, des éléments d'emboîtement conjugués. D'une manière générale, ces éléments d'emboîtement sont formés par des glissières et des rails et sont disposés, de préférence, sur deux côtés opposés et horizontaux des plaques 15 et 21, respectivement du verrou 11 et du poussoir 20.

Dans l'exemple de réalisation représenté sur les figures, la plaque 15 du verrou 11 comporte, sur deux côtés opposés, et horizontaux, une glissière 16 et la plaque 21 du poussoir 20 comporte, sur deux côtés opposés et horizontaux un rail 23.

Selon une variante, non représentée, la plaque 15 du verrou 11 peut être équipée des rails 23 et la plaque 21 du poussoir 20 peut être équipée des glissières 16.

Pour assurer le blocage du verrou 11 sur le poussoir 20, chaque glissière 16 comporte, au niveau d'au moins une de ses extrémités, un pion souple 17 de blocage sur le rail correspondant qui, lors du positionnement du verrou 11 sur le poussoir 20, s'écarte et ensuite reprend sa position pour bloquer le rail 23 correspondant.

De préférence, le poussoir 20 est formé par une pièce métallique et il comporte sur les côtés de la plaque 21 disposée entre les rails 23, deux pattes 25 parallèles et dont l'écartement est sensiblement égal à l'épaisseur de la pièce plane 2. Ces pattes 25 s'étendent perpendiculairement à la plaque 21 et sont destinées à venir s'appliquer sur les faces latérales de la pièce plane 2 et à y être fixées par exemple par soudage.

Ainsi que montré sur les Figs. 1 et 3, le bord 2a de la pièce plane 2 est pourvu d'une encoche 5 en forme d'arc de cercle et qui est destinée à recevoir l'extrémité de la rotule 3, comme cela apparaît à la Fig. 3.

L'assemblage des différents éléments composant le dispositif de liaison autobloquante selon l'invention est réalisé de la façon suivante.

Tout d'abord, le poussoir 20 est monté sur la pièce plane 2 en plaçant le bord 2a de cette pièce plane 2 entre les branches 25 et ensuite en faisant glisser ces branches 25 sur les faces latérales de ladite pièce plane 2 afin d'amener la calotte sphérique 22 de la plaque 21 dans l'encoche 5.

Le poussoir 20 est solidarisé de la pièce plane 2, par exemple en soudant les branches 25 sur cette pièce 2.

Ensuite, l'opérateur monte le verrou 11 sur le poussoir 20 selon un direction perpendiculaire à l'axe longitudinal XX de la tige de commande 1 en faisant pénétrer chaque rail 23 de la plaque 21 du poussoir 20 dans une glissière 16 de la plaque 15 du verrou 11. Le blocage de ce verrou 11 sur le poussoir 20 est assuré par les pions souples 17 au niveau de chaque extrémité de chacun des rails 23.

Après avoir monté le verrou 11 sur le poussoir 20, l'opérateur approche la tige de commande 1 du verrou 11 et fait pénétrer la rotule 23 dans l'ouverture 13 de ce verrou 11. Les pattes flexibles 14 s'écartent progressivement de leur position de repos jusqu'à atteindre un écartement tel que leur extrémité 14a atteigne un diamètre sensiblement égal à celui du diamètre de la rotule 3.

Une fois que cette rotule 3 a franchi les extrémités 14a des pattes flexibles 14, celles-ci reviennent à leur position de repos ce qui assure le blocage de la rotule 3 de la tige de commande 1 dans la cavité 12 du verrou 11, ainsi que montré à la Fig. 3. Dans cette position, l'extrémité de la rotule 3 vient se loger dans l'orifice 22 de la calotte sphérique 22 de la plaque 21 ainsi que dans l'encoche 5.

La liaison autobloquante entre la tige de commande 1 et la pièce plane 2 au moyen du verrou 11 et du poussoir 20 est ainsi réalisée.

Le fait du mode d'assemblage du verrou 11 sur le poussoir 20 selon une direction perpendiculaire à l'axe longitudinal de la tige de commande 1, c'est à dire selon une direction perpendiculaire à la direction des efforts de fonctionnement, permet de faire passer plus d'efforts entre les différents éléments composant le dispositif de liaison, conforme à l'invention.

Le dispositif de liaison selon l'invention présente également l'avantage de pouvoir être facilement monté dans un environnement peu accessible.

Bien que la liaison selon l'invention ait été décrite en référence à la liaison entre une pédale de frein et une tige de commande d'un amplificateur de freinage d'un véhicule automobile, celle-ci s'applique à tout type de liaison entre une tige avec une extrémité à rotule et une pièce plane.

## Revendications

1. Dispositif de liaison autobloquante entre une tige de commande (1) à rotule (3) et une pièce plane (2), comme par exemple entre une tige de commande d'un amplificateur de freinage et une pédale de frein d'un véhicule automobile, ledit dispositif de liaison comprenant :
- un verrou (11) formé par une pièce cylindrique munie d'une cavité (12) hémisphérique adaptée pour loger la rotule (3) ménagée à une extrémité de la tige de commande (1) et comportant, à l'une de ses extrémités, une pluralité de pattes flexibles (14) dont la partie intérieure (14a) est recourbée vers l'intérieur de la pièce (11) pour bloquer la rotule (3) après son introduction dans ladite cavité (12), et
- un poussoir (20) fixé solidairement à la pièce plane (2) et relié audit verrou (11),
**caractérisé en ce que** le verrou (11) et le poussoir (20) comprennent des moyens (15, 16, 17, 21, 23) de fixation l'un sur l'autre par coulissement selon une direction perpendiculaire à l'axe longitudinal de la tige de commande (1).

2. Dispositif selon la revendication 1, **caractérisé en ce que** les moyens de fixation comprennent une plaque rectangulaire (15) disposée à l'extrémité de la pièce formant le verrou (11) opposée à celle comportant les pattes flexibles (14) et une plaque rectangulaire (21) portée par le poussoir (20), lesdites plaques (16, 21) comportant, sur deux côtés opposés, des éléments (16, 23) d'emboîtement conjugués.

3. Dispositif selon la revendication 2, **caractérisé en ce que** les côtés des plaques (15, 21) comportant lesdits éléments (16, 23) d'emboîtement sont deux côtés horizontaux.

4. Dispositif selon l'une quelconque des revendications 1 à 3, **caractérisé en ce que** les éléments d'emboîtement sont formés par des glissières (16) et des rails (23).

5. Dispositif selon la revendication (4), **caractérisé en ce que** les glissières (16) sont formées sur les deux côtés opposés de la plaque (15) du verrou (11) et les rails (23) sont formés sur les deux côtés opposés de la plaque (21) du poussoir (20).

6. Dispositif selon la revendication 4, **caractérisé en ce que** les rails (23) sont formés sur les deux côtés opposés de la plaque (15) du verrou (11) et les glissières (16) sont formées sur les deux côtés opposés de la plaque (21) du poussoir (20).

7. Dispositif selon la revendication 5 ou 6, **caractérisé en ce que** chaque glissière (16) comporte, au niveau d'au moins une de ses extrémités, un pion souple (17) de blocage sur le rail (23) correspondant.

8. Dispositif selon l'une quelconque des revendications 1 à 3, **caractérisé en ce que** le poussoir (20) comporte deux pattes (25) parallèles dont l'écartement est sensiblement égal à l'épaisseur de la pièce plane (2) et s'étendant perpendiculairement à la plaque (21) du poussoir (20), lesdites pattes (25) étant solidaires des côtés de cette plaque (15) entre les éléments (23) d'emboîtement.

9. Dispositif selon la revendication 8, **caractérisé en ce que** la plaque (21) du poussoir (20) comporte, dans son centre, une calotte sphérique (22).

10. Dispositif selon l'une quelconque des revendications précédentes, **caractérisé en ce que** le poussoir (20) est formé par une pièce métallique.

11. Véhicule automobile, **caractérisé en ce qu'**il est équipé d'au moins un dispositif de liaison (10) selon l'une quelconque des revendications 1 à 10, pour la liaison entre une tige de commande (1) d'un amplificateur de freinage et une pédale de frein (2).
